# EUROPEAN PATENT SPECIFICATION

(11) **EP 4 523 043 B1**
(45) Date of publication and mention of the grant of the patent: **03.06.2026**
(21) Application number: 23724101.3
(22) Date of filing: 19.04.2023
(51) Int. Cl.: G03B 21/00, G03B 21/20

(54) **FAST OPTO-MECHANICAL ATTENUATOR FOR HIGH-POWER PROJECTOR SYSTEMS**
SCHNELLER OPTOMECHANISCHER DÄMPFER FÜR HOCHLEISTUNGSPROJEKTORSYSTEME
ATTÉNUATEUR OPTO-MÉCANIQUE RAPIDE POUR SYSTÈMES DE PROJECTEUR HAUTE PUISSANCE

(30) Priority: 11.05.2022 US 202263340699 P
(43) Date of publication of application: 19.03.2025
(73) Proprietor: Dolby Laboratories Licensing Corporation, San Francisco, CA 94103 (US)
(72) Inventor: ARNTSEN, John Frederick, San Francisco, California 94103 (US); LIPPEY, Barret, San Francisco, California 94103 (US); PERTIERRA, Juan Pablo, San Francisco, California 94103 (US); RICHARDS, Martin J., San Francisco, California 94103 (US); JACKSON, John David, San Francisco, California 94103 (US)
(74) Representative: Dolby International AB Patent Group Europe
(86) International application number: PCT/US2023/019118
(87) International publication number: WO 2023/219766

(56) References cited:
- WO-A1-2015/063856
- WO-A1-2018/113314
- JP-A- 2006 349 731
- US-A1- 2006 050 248
- US-A1- 2006 056 023
- US-A1- 2007 064 203
- US-A1- 2009 168 041

## Description

### 1. Cross-Reference to Related Applications

### 2. Field of the Disclosure

Various example embodiments relate to optical attenuators for laser projector systems.

### 3. Background

An optical attenuator is a device that can be used to reduce the power level of an optical beam or signal, either in free space or in an optical fiber. The power reduction can be achieved using absorption, reflection, diffusion, scattering, redirection, diffraction, dispersion, or other suitable means. Optical attenuators can be fixed, stepwise variable, and continuously variable. Various optical attenuators for various spectral bands are commonly used, e.g., in fiber-optic communication systems, image projectors, laser-cutting machines, and many other technologies involving lasers.

US 2007/064203 A1 relates to an image projecting apparatus having an integrator for generating plural secondary-light-source images for generating illumination light with a uniform intensity; and a variable stop mechanism arranged at or near a position conjugate with the secondary-light-source images. The variable stop mechanism has a base plate having a fixed aperture; and a stop blade which moves across the aperture for changing a quantity of light. The change in the quantity of light passing through said variable stop caused by the movement of said stop blade is greater than a change in a size of an effective region of a stop aperture.

US 2006/050248 A1 relates to a projection display apparatus for expanding and projecting an image, which is formed by an optical modulator, using a projection lens. A light source illuminates the optical modulator. A first lens array divides light emitted from the light source into a plurality of partial luminous fluxes. A second lens array superimposes the plurality of partial luminous fluxes emitted from the first lens array onto the optical modulator. A diaphragm mechanism is disposed between the light source and the optical modulator, and controls an amount of light from the light source. A traveling direction of the light emitted from the light source is defined as a Z-axis, a direction perpendicular to the Z-axis is defined as an X-axis, and a direction perpendicular to a plane formed by the Z-axis and the X-axis is defined as a Y-axis. An area of an opening of the diaphragm mechanism changes in a direction of the X-axis or the Y-axis.

### BRIEF SUMMARY OF SOME SPECIFIC EMBODIMENTS

The invention is set out in the appended set of claims. Disclosed herein are various embodiments of a projector system having a global opto-mechanical dimmer of the illumination light applied to the spatial optical modulator thereof. The dimmer includes a motion actuator, such as a voice coil actuator (VCA), and one or more reflective surfaces movable by the motion actuator to reflect away from the spatial optical modulator, e.g., to a light dump, a variable portion of the source light. The dimmer is constructed to be capable of changing the overall optical power of the illumination light by a factor of ten or more in a time shorter than the reciprocal frame rate of the projected video stream, e.g., shorter than approximately 20 ms. Since the dimmer can be operated separately from the system's light source, the corresponding projector system may beneficially employ substantially any suitable laser source while still being able to meet operability targets with respect to fast, variable global dimming. In at least some embodiments, the projector system may be a high-power, cinema-grade laser projector system configured to operate in compliance with the SMPTE 431-1-2006 standard.

According to an example embodiment, provided is a projector system including an opto-mechanical attenuator configured to variably attenuate source light directed to an optical output thereof; an optical modulator configured to generate spatially modulated light by modulating illumination light received from the optical output, said modulating being performed in accordance with image data representing a sequence of image frames, each of the image frames having a constant time duration; and optics configured to optically couple the optical output to the optical modulator and further configured to project the spatially modulated light, thereby projecting the sequence of image frames. The opto-mechanical attenuator is configured to change an optical power of the illumination light from a first fixed power level to a second fixed power level in a time shorter than the constant time duration.

According to another example embodiment, provided is a method of variably attenuating illumination light applied to an optical modulator of a projector system, the optical modulator being configured to generate spatially modulated light by modulating the illumination light in accordance with image data representing a sequence of image frames, each of the image frames having a constant time duration, the method comprising the steps of: moving one or more reflective surfaces to reflect away from the optical modulator a variable portion of a source light and to direct the illumination light to the optical modulator, the illumination light comprising a remaining portion of the source light, the moving being performed using a motion actuator; and operating the motion actuator to change an optical power of the illumination light from a first fixed power level to a second fixed power level in a time shorter than the constant time duration.

According to another example embodiment, provided is a projector system, comprising: an opto-mechanical attenuator configured to variably attenuate source light directed to an optical output thereof; an optical modulator configured to generate spatially modulated light by modulating illumination light received from the optical output, said modulating being performed in accordance with image data; and first optics configured to optically couple the optical output to the optical modulator; wherein the opto-mechanical attenuator is configured to change an optical power of the illumination light from a first fixed power level to a second fixed power level; and wherein the opto-mechanical attenuator and the first optics are configured to cause the illumination light to uniformly illuminate the optical modulator such that relative luminance in all geometric modulating parts thereof expressed as a percentage of luminance in a middle geometric modulating part thereof is higher than 75% at both the first fixed power level and the second fixed power level.

In some embodiments, the projector system comprises second optics configured to project the spatially modulated light onto a screen; and wherein the opto-mechanical attenuator and the first and second optics are configured to cause uniform illumination of the screen such that, for an unmodulated light, relative luminance at sides and in corners of the screen expressed as a percentage of luminance in a geometric center of the screen is higher than 75% at both the first fixed power level and the second fixed power level.

### BRIEF DESCRIPTION OF THE DRAWINGS

Other aspects, features, and benefits of various disclosed embodiments will become more fully apparent, by way of example, from the following detailed description and the accompanying drawings, in which:
FIG. 1 is a block diagram illustrating a projector system according to various embodiments.
FIG. 2 is a plan view illustrating an opto-mechanical assembly that can be used in the projector system of FIG. 1 according to an embodiment.
FIG. 3 is a plan view illustrating the opto-mechanical assembly of FIG. 2 in an example non-zero attenuation configuration.
FIG. 4 illustrates a mirror shape that can be used in the opto-mechanical assembly of FIG. 2 according to an embodiment.
FIG. 5 illustrates a mirror shape that can be used in the opto-mechanical assembly of FIG. 2 according to another embodiment.
FIG. 6 illustrates a mirror shape that can be used in the opto-mechanical assembly of FIG. 2 according to yet another embodiment.
FIG. 7 illustrates a mirror shape that can be used in the opto-mechanical assembly of FIG. 2 according to yet another embodiment.
FIG. 8 is a three-dimensional perspective view illustrating an opto-mechanical assembly that can be used in the projector system of FIG. 1 according to another embodiment.
FIG. 9 illustrates an optical-aperture shape that can be used in the opto-mechanical assembly of FIG. 8 according to another embodiment.
FIG. 10 illustrates an optical-aperture shape that can be used in the opto-mechanical assembly of FIG. 8 according to yet another embodiment.
FIG. 11 is a schematic diagram illustrating an optical assembly that can be used in the projector system of FIG. 1 according to an embodiment.
FIG. 12 is a schematic diagram illustrating an optical model of a dimmer that can be used in the projector system of FIG. 1 according to an embodiment.
FIGs. 13-14 are schematic diagrams illustrating an optical model of a dimmer that can be used in the projector system of FIG. 1 according to another embodiment.
FIG. 15-16 graphically illustrate temporal dimming and undimming characteristics, respectively, of a dimmer that can be used in the projector system of FIG. 1 according to an embodiment.

### DETAILED DESCRIPTION

In the following description, numerous details are set forth, such as optical device configurations, timings, operations, and the like, in order to provide an understanding of one or more aspects of the present disclosure. It will be readily apparent to one skilled in the pertinent art that these specific details are merely examples and not intended to unduly limit the scope of this application.

Moreover, while the present disclosure focuses mainly on examples in which the various circuits are used in digital projection systems, it will be understood that these are merely examples. It will further be understood that the disclosed systems and methods can be used in any device in which there is a need to project light, for example, cinema, consumer, and other commercial projection systems, heads-up displays, virtual reality displays, and the like. Disclosed systems and methods may be implemented in additional display devices, such as with an OLED display, an LCD display, a quantum dot display, or the like.

Light-steering modulators may create an image at a plane different from the modulator plane itself. This plane may be a virtual plane or a real plane. Light-steering modulators may have flat mirror surfaces, and therefore typically have no native illumination angle other than some configuration which allows normal illumination. Light-steering modulators may create an image or object on the modulator itself and have angled mirrors.

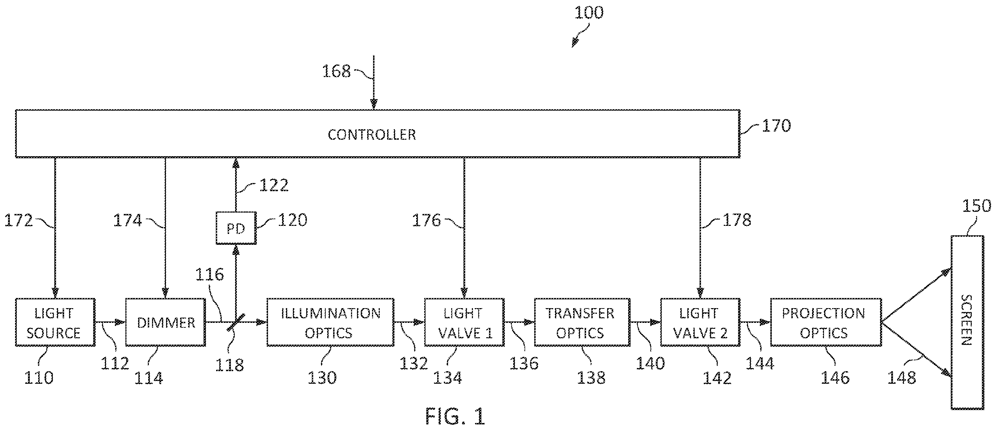

FIG. 1 is a block diagram illustrating a projector system 100 according to various embodiments. As shown FIG. 1, the projector system 100 comprises a light source 110, a variable optical attenuator (dimmer) 114, illumination optics 130, a first light valve 134, transfer optics 138, a second light valve 142, and projection optics 146. The projector system 100 may also include an electronic controller 170 and a screen 150. In some embodiments, the screen 150 may be an external component, i.e., may be provided in the environment in which the projector system 100 is deployed. An example of such screen 150 may be a cinema screen in a movie theater. In some embodiments, the controller 170 may have at least some components thereof located remotely and connected to other components of the projector system 100 using a suitable network link.

In operation, the dimmer 114 may attenuate a first light 112 emitted by the light source 110, thereby producing a second light 116. The light attenuation imposed by the dimmer 114 may be dynamically changed based on a control signal 174 applied to the dimmer by the controller 170. When the dimmer 114 is configured to apply an optical attenuation of substantially 0 dB, the second light 116 may be substantially the same as the first light 112. In other configurations, the attenuation controllably imposed by the dimmer 114 may have any selected value, e.g., in the range between 0 dB and -40 dB (or 99.9%). The actual value of the optical attenuation imposed by the dimmer 114 can be measured using a fixed optical tap 118 and a photodetector (PD) 120. For example, the optical tap may direct a relatively small (e.g., <5%) portion of the second light 116 to the PD 120, and an electrical output signal (e.g., current or voltage) 122 generated by the PD 120 in response to that light portion can be processed by the controller 170 to determine the intensity of the second light 116. In some embodiments, the optical tap 118 and the PD 120 may be absent, e.g., are optional. In some embodiments, the optical tap 118 may be placed further downstream from the shown location, e.g., downstream from the illumination optics 130. Various embodiments of the projector system 100 may provide DCI contrast ratios in the range from approximately 1000:1 to approximately 1,000,000:1. Some embodiments of the dimmer 114 may be used in the projector system 100 to provide the dimming ratio of approximately 100:1 without inducing significant artifacts in the projected images. Some other embodiments of the dimmer 114 may be used in the projector system 100 to provide the dimming ratio of approximately 33:1 or 10:1 without inducing such artifacts. Herein, the acronym DCI stands for Digital Cinema Initiative.

The illumination optics 130 is configured to receive the second light 116 and redirect or otherwise modify the received light, thereby generating a third light 132. The first light valve 134 is configured to apply spatially varying (e.g., phase) modulation to the third light 132, thereby generating a fourth light 136. The first light valve 134 can steer the fourth light 136, e.g., by changing the phase-modulation pattern thereof in response to a control signal 176 received from the controller 170. The transfer optics 138 is configured to receive the fourth light 136 and redirect or otherwise modify the received light, thereby generating a fifth light 140. The second light valve 142 is configured to apply spatially varying (e.g., amplitude) modulation to the fifth light 140, thereby generating a sixth light 144. The second light valve 142 can change the amplitude-modulation pattern thereof in response to a control signal 178 received from the controller 170. The projection optics 146 is configured to receive the sixth light 144 and project the received light as a seventh light 148 onto the screen 150. In different embodiments, each of the light valves 134, 142 can be implemented using a respective suitable modulation device, e.g., selecting from a device set including a spatial light modulator (SLM), a liquid crystal on silicon (LCoS) modulator, a MEMS light modulator, a digital micromirror device (DMD), a digital light processor (DLP), and other suitable optical modulators. In some embodiments, the transfer optics 138 and one of the light valves 134, 142 may be absent. For example, in embodiments in which the light valve 134 and the transfer optics 138 are absent, the third light 132 is applied directly to the light valve 142.

In addition to generating the above-mentioned control signals 174, 176, 178, the electronic controller 170 may also generate a control signal 172 for controlling the emission of the first light 112 by the light source 110, as indicated in FIG. 1. In some embodiments, the controller 170 may additionally or alternatively control some other components of the projector system 100, including but not limited to the illumination optics 130, the transfer optics 138, and/or the projection optics 146. In an example embodiment, the controller 170 may be implemented using one or more processors, e.g., a central processing unit (CPU) of the projector system 100. The illumination optics 130, the transfer optics 138, and the projection optics 146 may each include one or more respective optical components, such as mirrors, lenses, waveguides, optical fibers, beam splitters, diffusers, etc. Except for the screen 150, some or all other system components illustrated in FIG. 1 may be integrated into a housing (not explicitly shown in FIG. 1) to provide a projection device. Such a projection device may include additional components (not explicitly shown in FIG. 1), such as a memory, input/output ports, communication circuitry, a power supply, and so on.

The light source 110 is a laser source. The first light 112 may be coherent or partially coherent light. In some embodiments, the light source 110 may comprise multiple individual light emitters, each capable of emitting light corresponding to a different respective wavelength or spectral band (e.g., red, green, or blue). The controller 170 may generate control signals 172, 174, 176, 178 in response to an image signal 168 including image data. The image signal 168 may correspond to a single image frame or a sequence of image frames. The image signal 168 may originate from (i) an external source, such as a streaming service or a cloud-based file depository, (ii) an internal memory of the projector system 100, such as a hard-disk or solid-state drive, (iii) a removable machine-readable medium connectable to the projector system 100, or (iv) any suitable combinations thereof.

In an example embodiment, the transfer optics 138 and/or the projection optics 146 may include an optical filter configured to mitigate certain deleterious effects caused by some components of the projector system 100. For example, the first light valve 134 may include a cover glass that may cause spurious reflections. The switching of the light valves 134, 142 may intermittently cause unwanted steering angles. Various components of the projector system 100 may cause light scattering. To counteract these and some other deleterious effects and to decrease the light-floor (black) level of the projector system 100, the optical filter may be a Fourier ("DC") filter component configured to block a portion of the fourth light 136 and/or a portion of the sixth light 144. In operation, such an optical filter may help to increase contrast by reducing the black level for light near the zero angle and may be used to prevent certain light from reaching the screen 150. Additionally, such an optical filter may mitigate modal noise from the light source 110. In some cases, the optical filter may prevent some undesired light from reaching the screen 150 by steering said light to a light dump located outside the active image area or optical path, e.g., in response to a suitable control signal from the controller 170.

Although the block diagram of FIG. 1 illustratively shows a generally linear optical path between the laser source 110 and the projection optics 146, various embodiments are not so limited. More specifically, in some embodiments, the optical path between the laser source 110 and the projection optics 146 may deviate significantly from a straight line and be generally of a more-complex topology. For example, in the projector system 100, the third light 132 may be directed to the light valve 134 at an oblique angle. The fifth light 140 may similarly be directed to the light valve 142 at an oblique angle. To ensure that the image on the screen 150 has an acceptable clarity and contrast ratio, the illumination optics 130 may be designed, configured, and/or controlled to maintain the angle of incidence on the light valve 134 in the desired (e.g., intended) range, while also maintaining the centered position of the third light 132 thereon. The light valve 134 and/or the transfer optics 138 may be designed, configured, and/or controlled to ensure that the angle of incidence on the light valve 142 is also correct, while maintaining the centered position of the fifth light 140 thereon. In at least some embodiments, the projector system 100 may substantially comply with the SMPTE 431-1-2006 standard.

In some cases, it may be beneficial for the projector system 100 to have a capability for achieving improved black levels in certain cinematic scenes, e.g., by means of global dimming, wherein the amount of light directed downstream from the light source 110 is significantly and controllably reduced. According to various possible approaches, global dimming may be implemented, e.g., by electronically adjusting the laser's electrical drive level(s) and/or by acousto-optically, electro-optically, or opto-mechanically deflecting a portion of the first light 112 away from the main optical path. However, some types of light source 110 may not lend themselves to light attenuation or adjustment by way of electronic control in a manner that is adequate for cinematic imaging. For example, some laser systems may have a relatively narrow operating-configuration space that may not provide a sufficient margin of adjustability for achieving a desired range of brightness changes, e.g., between the full brightness and the ideal-black (i.e., no-light) level thereof. In addition, some laser systems may be relatively slow to respond and settle to an adjusted optical-power level, i.e., do not inherently exhibit sufficiently fast brightness dynamics suitable for video imaging.

At least some of the above-indicated and possibly some other related problems in the state of the art can beneficially be addressed using embodiments of the projector system 100 and/or the dimmer 114 disclosed herein. In an example embodiment, the dimmer 114 may be designed, configured, and/or controlled to opto-mechanically deflect or clip a variable amount of the first light 112 in response to the control signal 172. Since the dimmer 114 can be operated separately from the light source 110, the use of said dimmer enables the projector system 100 to employ substantially any suitable type of laser in the light source 110 while being able to meet the above-indicated operability targets with respect to fast, variable global dimming.

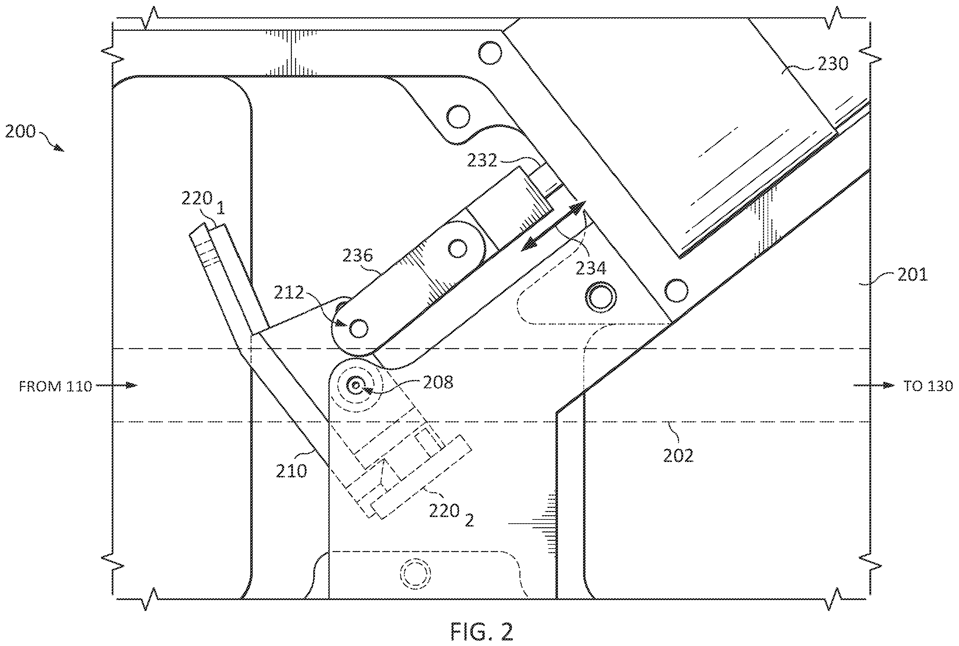

FIG. 2 is a plan view illustrating an opto-mechanical assembly 200 that can be used in the dimmer 114 according to an embodiment. The assembly 200 comprises a rotatable holder 210 having mounted thereon a pair of knife-edge mirrors 220, labeled 220₁ and 220₂, respectively. The holder 210 is rotatably connected to a pivot pin 208, which is attached to a stationary base 201. Also attached to the base 201 is a linear-motion actuator 230 having a movable shaft 232. In operation, the actuator 230 can controllably translate the shaft 232 along a longitudinal dimension thereof as indicated by a double-headed arrow 234. A connector piece 236 that is movably connected between the shaft 232 and the holder 210, as indicated in FIG. 2, enables conversion of linear translation of the shaft into rotation of the holder. More specifically, the connector piece 236 is rotatably connected to the holder 210 at a pivot point 212, which is offset by a non-zero distance from the pivot pin 208. This offset provides a lever for the shaft 232 to rotate the holder 210 about the pivot pin 208 in response to linear translation of the shaft caused by actuator 230.

In an example embodiment, the actuator 230 may be implemented using a linear VCA comprising a permanent magnet and a coil of wire in the magnetic field of the permanent magnet. When electrical current (e.g., 174, FIG. 1) is applied to the coil, a Lorentz force is generated, which can move the coil and the shaft 232 attached thereto. In operation, the electrical current 174 can be appropriately regulated by the controller 170 to control the translation distance of the shaft 232 and thus the rotation angle of the holder 210 about the pivot pin 208. In alternative embodiments, other types linear-motion actuators may also be used for the actuator 230. In some embodiments, a coiled spring (not explicitly shown in FIG. 2) may be connected between the holder 210 and the base 201 to generate an elastic return force counteracting the force of the VCA 230. In alternative embodiments, other types of linear-motion actuators may also be used for the actuator 230.

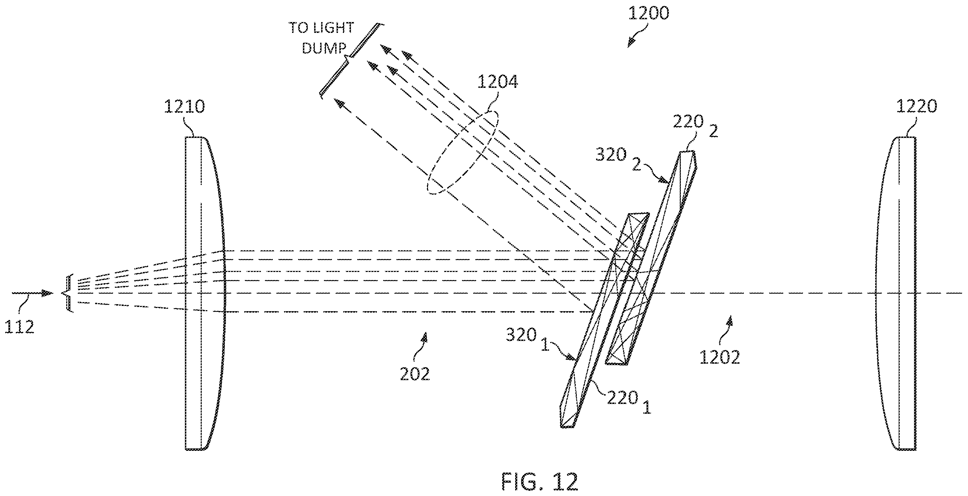

The assembly 200 may be positioned in the dimmer 114 such that a collimated optical beam 202 passes over a middle portion of the holder 210, e.g., over the pivot pin 208, as indicated in FIG. 2. In an example embodiment, the collimated optical beam 202 may carry the first light 112 or may be formed by collimating the first light (also see FIG. 12). The knife-edge mirrors 220₁ and 220₂ are attached to the holder 210 in a raised position such that rotation of the holder about the pivot pin 208 can bring said mirrors into and out of the optical path of the optical beam 202 as needed. In FIG. 2, the holder 210 is shown in an angular orientation in which the optical beam 202 is clear of the mirrors 220₁ and 220₂, which causes no attenuation of the optical beam.

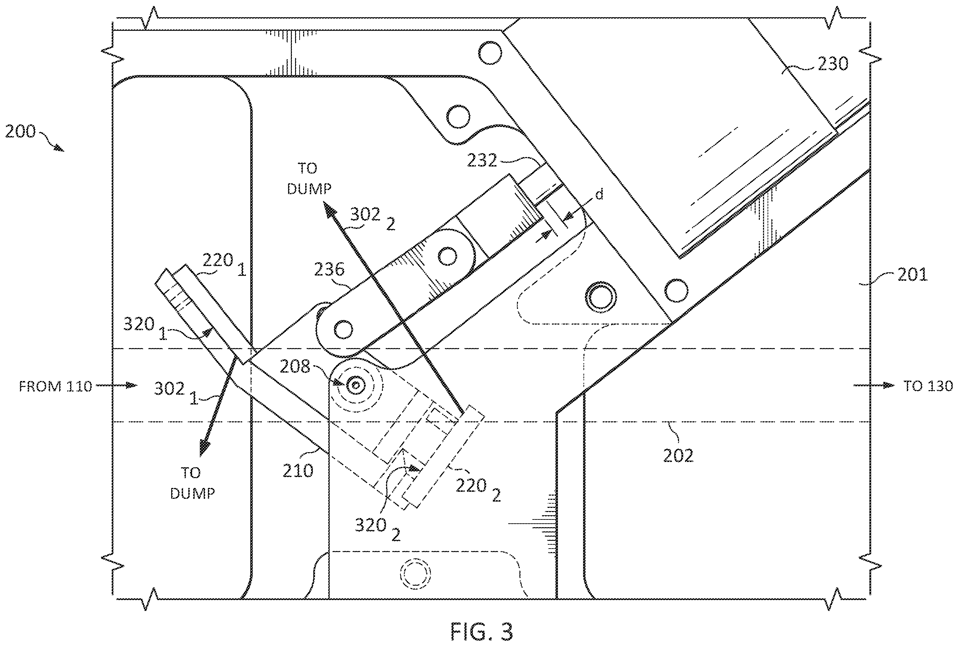

FIG. 3 is a plan view illustrating the opto-mechanical assembly 200 in an example non-zero attenuation configuration. Compared to the configuration illustrated in FIG. 2, the shaft 232 is extended away from the stationary body of the actuator 230 by an additional distance d, which causes the holder 210 to be rotated by a corresponding angle about the pivot pin 208. This rotation causes the leading edges of the mirrors 220₁ and 220₂ to move into the optical path of the optical beam 202, thereby clipping outer portions of the optical beam, e.g., as indicated in FIG. 3. Depending on the distance *d*, more or less of the transverse cross-section of the optical beam 202 may be clipped, thereby causing the corresponding optical attenuation to be variable. The distance d can be controlled by way of the control signal 174, e.g., as indicated above.

In an example embodiment, surfaces 320 (i.e., 320₁ on the mirror 220₁ and 320₂ on the mirror 220₂) facing the flow of the optical beam 202 may have a relatively high reflectivity. For example, in different embodiments, the reflectivity of the surfaces 320₁, 320₂ can be greater than about 90%, greater than about 95%, greater than about 98%, or even greater than 99%. For comparison, a typical polished-aluminum surface may have a visible-light reflectivity that is smaller than 90%. In various embodiments, the highly reflective surfaces 320₁, 320₂ may be implemented using high-quality metal mirrors or dielectric mirrors. In operation, the reflective surfaces 320₁, 320₂ reflect light, thereby tapping off some optical power of the optical beam 202 in the form of reflected optical beams 302₁, 302₂. The projector system 110 may typically have light dumps configured to receive the reflected optical beams 302₁, 302₂. As known in the pertinent art, a light dump is a heat sink having a relatively high absorption coefficient for the intended wavelengths of light, e.g., the wavelength(s) of the optical beam 202. A light dump may typically be black in color and have a shape enabling efficient heat dissipation therefrom, e.g., a shape characterized by a relatively high surface-to-volume ratio.

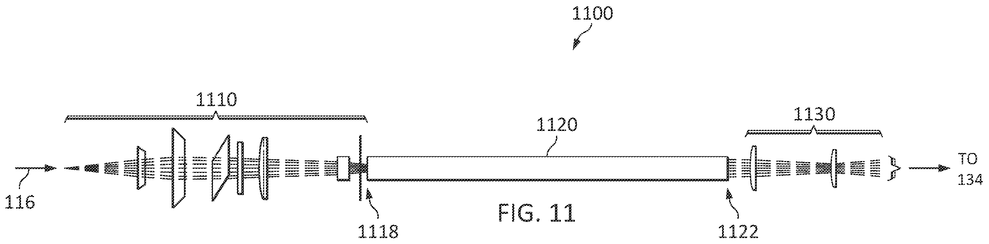

In an example embodiment, the mirrors 220₁ and 220₂ are configured to act substantially symmetrically on each side of the optical beam 202 such that a symmetry of the clipped/attenuated beam is maintained regardless of the attenuation level. In addition, the mirrors 220₁ and 220₂ may have shapes designed such that the optical-beam clipping thereby does not significantly or even noticeably degrade the uniformity of the light at the output of the corresponding homogenizing element, which is an integrator rod (also see FIG. 11). In some embodiments, the relative rotation angle of the holder 210 can be controlled more precisely based on the electrical output signal 122 generated by the PD 120 (also see FIG. 1).

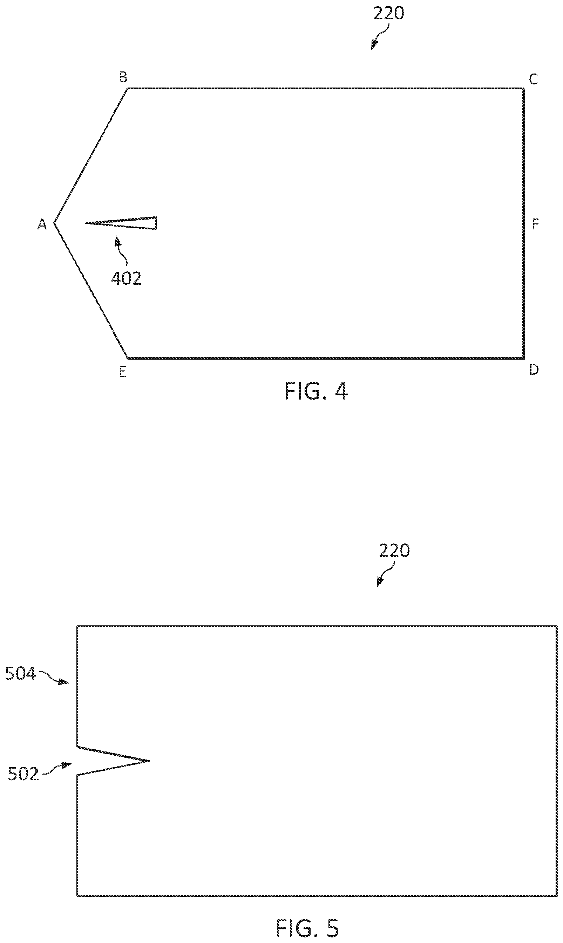

FIG. 4 illustrates a mirror 220 according to an embodiment. More specifically, a view of the mirror 220 shown in FIG. 4 is from the side of the reflective surface 320 thereof (also see FIG. 3). In an example embodiment, the assembly 200 may employ one instance of the mirror 220 as the mirror 220₁ and another instance of the mirror 220 as the mirror 220₂.

The mirror 220 of FIG. 4 has a shape of an irregular pentagon, the five apexes of which are labeled A-E. The sides BC and DE have the same length, are parallel to each other, and are orthogonal to the side CD. The sides AB and AE also have the same length, which is larger than the length of the side CD. In various embodiments, the length of the sides AB and AE may be greater than, smaller than, or the same as the length of the sides BC and DE. The angle at the apex A may be in the range, e.g., between 30 and 150 degrees. The shown pentagonal shape of the mirror 220 has a mirror symmetry with respect to a symmetry axis AF passing through the apex A and the midpoint F of the side CD. In some embodiments, the mirror 220 may also have a tapered (e.g., triangular) slot 402 along the symmetry axis AF in relatively close proximity to the apex A, as shown in FIG. 4. The taper angle of the slot 402 may be, e.g., in the range between 5 and 45 degrees. In some embodiments, the tapered slot 402 may be absent.

The shape of the mirror 220 shown in FIG. 4 may be beneficial in terms of reducing possible spatial intensity nonuniformities at the output of the homogenizing element (e.g., at 1122, FIG. 11). Such spatial intensity nonuniformities can potentially be caused by the clipping of the optical beam 102 by the pair of mirrors 220, i.e., 220₁, 220₂ (FIG. 3) if appropriate preventive measures are not properly implemented. More specifically, the homogenizing element, i.e. the integrator rod, may be located in the illumination optics 130 and may have a rectangular cross-section with an aspect ratio of approximately 2:1. To have a spatially uniform light output at the rectangular output end facet of the integrator rod, the input end facet thereof preferably needs to be filled with light having sufficiently diverse spatial and/or angular distributions. Beneficially, the shape of the mirror 220 shown in FIG. 4 causes these criteria to be substantially satisfied for a plurality of different positions of the mirrors 220₁, 220₂ with respect to the optical beam 202. For example, at relatively shallow insertion depths of the apex A into the optical beam 202, the diversities of spatial and angular light distributions at the input facet of the integrator rod are not significantly changed compared to those of the unclipped optical beam 202 (shown in FIG. 2) due to the limited beam clipping at the circumference of the optical beam by the "pointy" leading edge of the mirror 220. Similarly, at relatively large insertion depths of the apex A into the optical beam 202, the diversities of spatial and angular light distributions at the input end facet of the integrator rod may be maintained at sufficient levels due to the light from the circumference of the optical beam 202 passing through the two tapered slots 402 of the mirrors 220₁, 220₂.

FIG. 5 illustrates the mirror 220 according to another embodiment. The view of the mirror 220 shown in FIG. 5 is qualitatively similar to the view shown in FIG. 4. In this particular embodiment, the mirror 220 has a generally rectangular shape with a V-shaped notch 502 being located in the middle of a leading edge 504 of the mirror. In operation, the V-shaped notch 502 may help to keep the diversities of spatial and angular light distributions at the input end facet of the integrator rod at sufficient levels at relatively large insertion depths of the leading edge 504 into the optical beam 202, thereby reducing possible spatial intensity nonuniformities at the output end facet of the integrator rod.

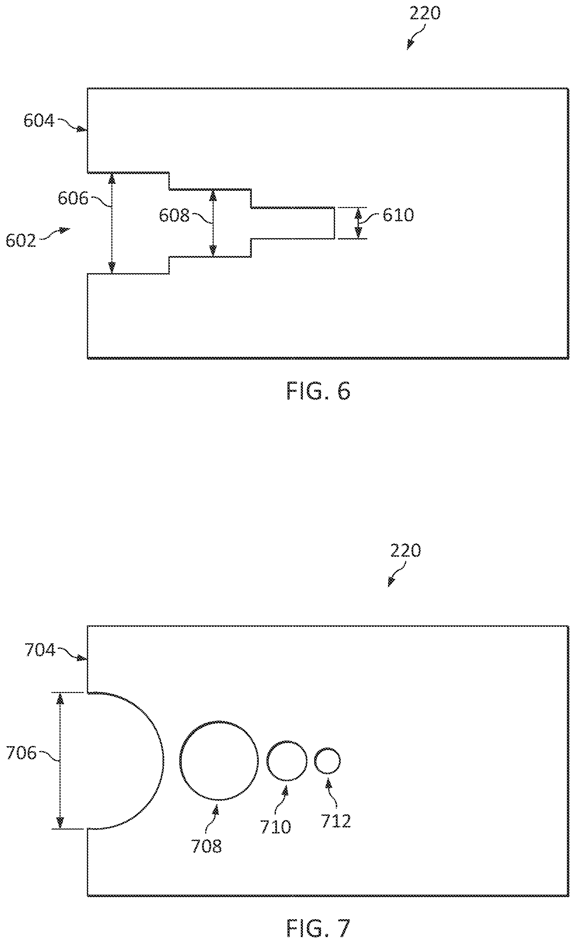

FIG. 6 illustrates the mirror 220 according to yet another embodiment. The view of the mirror 220 shown in FIG. 6 is qualitatively similar to the view shown in FIG. 4. In this particular embodiment, the mirror 220 has a generally rectangular shape with a stepped notch 602 being located in the middle of a leading edge 604 of the mirror. The stepped notch 602 is designed to provide three different discrete attenuation levels. The stepped nature of the notch 602 may beneficially be leveraged to make the dimmer 114 less sensitive to the precision of the positioning of the mirrors 220₁, 220₂ with respect to the optical beam 202, thereby obviating the need for the actuator feedback path, e.g., by way of the optical tap 118, PD 120, and feedback signal 122 (see FIG. 1). For example, even approximate positioning of a first stepped opening 606 of the notch 602 at the circumference of the optical beam 202 will result in the first discrete attenuation level. Similarly, even approximate positioning of a second stepped opening 608 of the notch 602 at the circumference of the optical beam 202 will result in the second discrete attenuation level, and even approximate positioning of a third stepped opening 610 of the notch 602 at the circumference of the optical beam 202 will result in the third discrete attenuation level. Consequently, embodiments employing the mirror 220 of FIG. 6 may not need to have the optical tap 118 and PD 120 therein. In addition, similar to the V-shaped notch 502 (FIG. 5), the overall shape of the stepped notch 602 may help to provide sufficient diversities of spatial and angular light distributions at the output end facet of the integrator rod for a plurality of different positions of the mirror 220 with respect to the optical beam 202.

FIG. 7 illustrates the mirror 220 according to yet another embodiment. The view of the mirror 220 shown in FIG. 7 is qualitatively similar to the view shown in FIG. 4. In this particular embodiment, the mirror 220 has a generally rectangular shape with a plurality of openings therein. A first opening 706 is a semicircular notch located in the middle of a leading edge 704 of the mirror 220. When the two first openings 706 of the mirrors 220₁, 220₂ are appropriately aligned in the assembly 200, an approximately circular effective aperture can be created. Each of additional openings 708, 710, and 712 is a circular opening of a different respective diameter. In operation, the openings 706, 708, 710, and 712 may be used to achieve performance characteristics similar to those described above in reference to the embodiment of FIG. 6.

In various alternative embodiments, other shapes of openings, notches, and leading edges may also be used. For example, in some embodiments, such shapes may be designed to have the attenuation level depend linearly on the insertion depth of the mirror into the optical beam 202. Other pertinent considerations, such as performance optimization, may also be factored in in the design of those shapes.

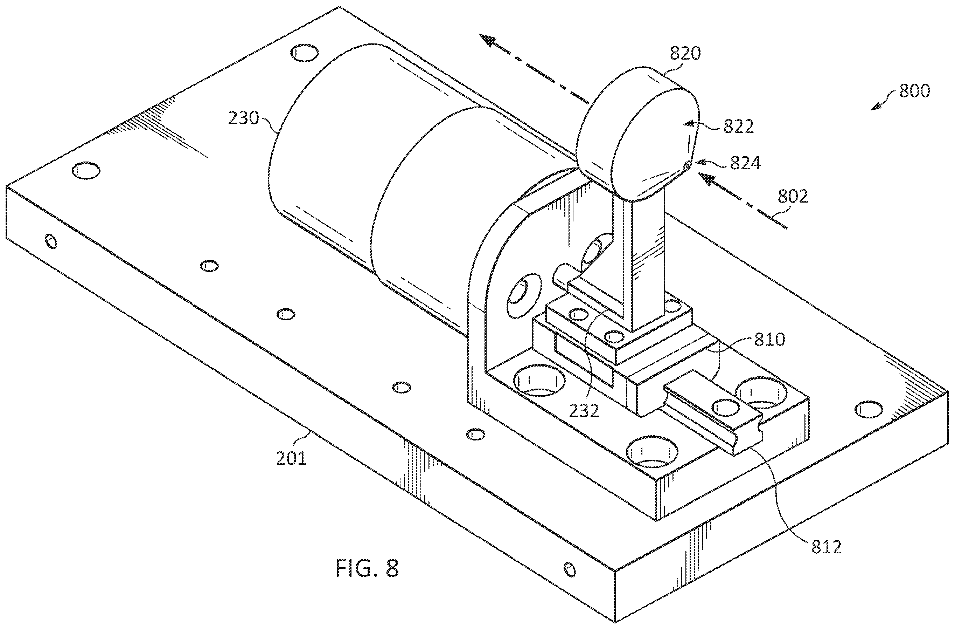

FIG. 8 is a three-dimensional perspective view illustrating an opto-mechanical assembly 800 that can be used in the dimmer 114 according to another embodiment. Similar to the assembly 200 (FIG. 2), the assembly 800 includes the actuator 230, e.g., a linear VCA. However, in this particular embodiment, the shaft 232 of the actuator 230 is connected to an optical carriage 810 mounted on an optical rail 812. In operation, movement of the shaft 232 produces corresponding translation of the optical carriage 810 along the optical rail 812.

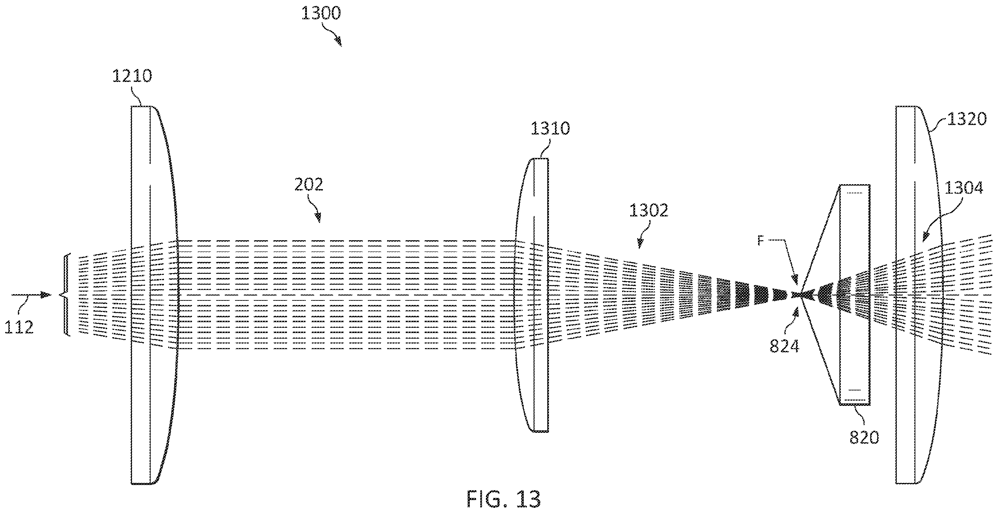

In the dimmer 114, the assembly 800 may be positioned such that the longitudinal direction of the optical rail 812 is parallel to the propagation axis of an optical beam 802, as indicated in FIG. 8. In an example embodiment, the optical beam 802 may carry the first light 112 (FIG. 1) or may be formed by shaping (e.g., focusing) the first light (e.g., see 1302, FIG. 13). The assembly 800 also includes an optical aperture 820 positioned in the optical path of the optical beam 802. The optical aperture 820 is mounted on the optical carriage 810 as indicated in FIG. 8 and, as such, is movable along the optical beam 802.

In an example embodiment, the optical aperture 820 comprises a generally conical, reflective front surface 822, the reflection characteristics of which may generally be similar to those of the above-described reflective surfaces 320 (see, e.g., FIG. 3 and the corresponding description). The conical front surface 822 has a small circular opening 824 at the vertex thereof. When the opening 824 is positioned at a focal point of the optical beam 802, substantially no optical attenuation takes place, and substantially all light of the optical beam passes through the opening to the backside of the optical aperture 820. However, when the opening 824 is positioned at a meaningful non-zero distance from the focal point, some of the light is reflected from the conical front surface 822 toward a light dump, thereby causing attenuation of the optical beam 802. The attenuation level can be changed by controllably translating the optical carriage 810 along the optical rail 812, e.g., in response to the control signal 174 applied to the actuator 230 as previously described.

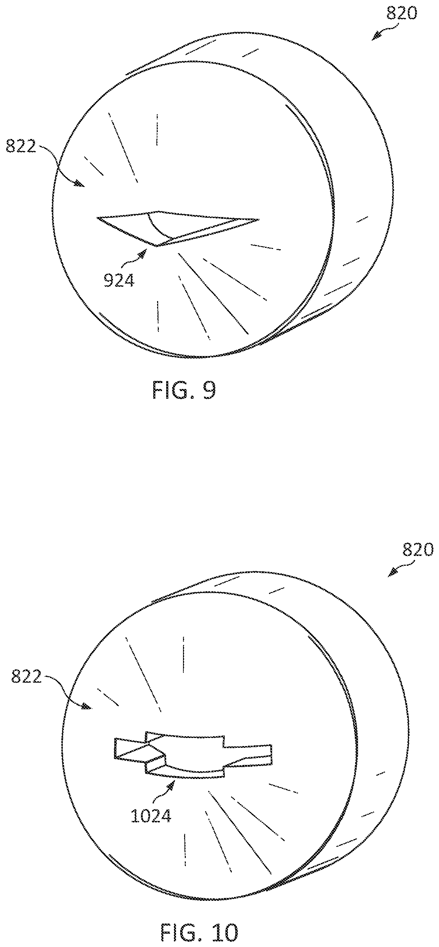

FIG. 9 is a three-dimensional perspective view illustrating the optical aperture 820 according to another embodiment. The embodiment of FIG. 9 is generally similar to the embodiment of the optical aperture 820 shown in FIG. 8 and similarly has the generally conical, reflective front surface 822. However, instead of the circular opening 824, the embodiment of FIG. 9 has an approximately rhombus-shaped opening 924. In operation, the embodiment of the optical aperture 820 shown in FIG. 9 may provide at least some of the benefits described above in reference to the embodiment of the mirror 220 shown in FIG. 5. In particular, it can be noticed that, when appropriately positioned, the two notches 502 of the mirrors 220₁, 220₂ form an effective opening similar in shape to the opening 924.

FIG. 10 is a three-dimensional perspective view illustrating the optical aperture 820 according to yet another embodiment. The embodiment of FIG. 10 is generally similar to the embodiment of the optical aperture 820 shown in FIG. 8 and similarly has the generally conical, reflective front surface 822. However, instead of the circular opening 824, the embodiment of FIG. 10 has a stepped opening 1024. In operation, the embodiment of the optical aperture 820 shown in FIG. 10 may provide at least some of the benefits described above in reference to the embodiment of mirror 220 shown in FIG. 6. In particular, it can be noticed that, when appropriately positioned, the two stepped notches 602 of the mirrors 220₁, 220₂ form an effective opening analogous in shape to the opening 1024.

FIG. 11 is a schematic diagram illustrating an optical assembly 1100 that can be used in the illumination optics 130 according to an embodiment. The optical assembly 1100 includes a first optical set 1110, an integrator rod 1120, and a second optical set 1130. The integrator rod 1120 may comprise a substantially reflective surface in its interior, so that the light that enters the integrator rod through an input end facet 1118 thereof is internally reflected and re-reflected until the light exits the integrator rod at an output end facet 1122 thereof. The first optical set 1110 may include various optical elements, such as lenses, filters, and/or polarizers, that may suitably optically act on the second light 116 before the resulting light is applied to the input end facet 1118 of the integrator rod 1120. The second optical set 1130 may similarly include various optical elements, such as lenses, filters, and/or polarizers, that may suitably optically act on the light exiting the output end facet 1122 of the integrator rod 1120 before the resulting light is applied to the light valve 134 (also see FIG. 1). As already indicated above, the input and output end facets 1118, 1122 may have various shapes, including rectangular shapes in some embodiments.

In various embodiments, the opto-mechanical assemblies 200, 800 and the optical assembly 1100 may be configured to provide good luminance uniformity across the spatial light modulator 142 and further on the screen 150 at different light-attenuation levels of the dimmer 114. For example, the luminance on the spatial light modulator 142 may be symmetrically distributed about the geometric center of the modulating surface, without exhibiting abrupt changes. For a rectangular modulating surface, the luminance values at the sides and corners thereof as a percentage of the luminance value at the center thereof may be in the range between approximately 75% and approximately 90% or in the range between approximately 80% and approximately 90% for different light-attenuation levels of the dimmer 114. Further, in some embodiments, when unmodulated light is projected onto the screen 150, the luminance values at the sides and corners of the screen 150 as a percentage of the luminance value at the center thereof may be in the range between approximately 75% and approximately 90% or in the range between approximately 80% and approximately 90% for different light-attenuation levels of the dimmer 114.

FIG. 12 is a schematic diagram illustrating an optical model 1200 of the dimmer 114 according to an embodiment. The optical model 1200 represents an embodiment of the dimmer 114 employing the optical assembly 200 (FIG. 2), wherein each of the mirrors 220₁, 220₂ is a respective instance of the mirror 220 shown in FIG. 5. In the configuration represented by FIG. 5, the insertion depth of the mirrors 220₁, 220₂ into the optical beam 202 is relatively large, which results in relatively strong attenuation of the beam's optical power. A resulting attenuated optical beam is labeled 1202. The reflective surfaces 320₁, 320₂ of the mirrors 220₁, 220₂ reflect the clipped portions of the optical beam 202 toward the light dump. The corresponding reflected light rays are labeled 1204.

According to the optical model 1200, the dimmer 114 includes relay optics comprising first and second relay lenses 1210, 1220. The mirrors 220₁, 220₂ are positioned in the relay space of the relay optics between the first relay lens 1210 and the second relay lens 1220. The first relay lens 1210 operates to collimate the first light 112 to form the collimated optical beam 202. The second relay lens 1210 and possibly additional optical elements (not explicitly shown in FIG. 1) process the attenuated optical beam 1202 to produce the second light 116.

FIG. 13 is a schematic diagram illustrating an optical model 1300 of the dimmer 114 according to another embodiment. The optical model 1300 represents an embodiment of the dimmer 114 employing the optical assembly 800 (FIG. 8). According to the optical model 1300, the dimmer 114 includes lenses 1210, 1310, and 1320. As already indicated above, the first lens 1210 operates to collimate the first light 112 to form the collimated optical beam 202. The second lens 1310 focuses the collimated optical beam 202 at a focal point F thereof. The circular opening 824 of the optical aperture 820 is positioned at the focal point F, wherein the neck of a focused optical beam 1302 fits into the circular opening, thereby allowing the corresponding light to pass through towards the third lens 1320 substantially without attenuation. The third lens 1320 operates to partially collimate a transmitted optical beam 1304 for further processing downstream, e.g., in the illumination optics 130.

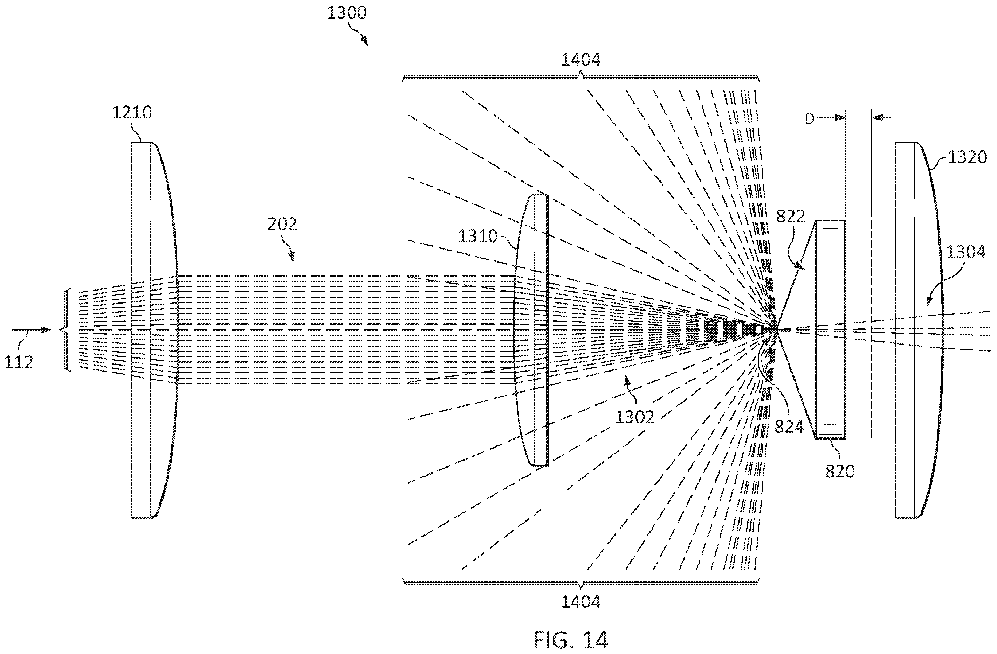

FIG. 14 is a schematic diagram illustrating the optical model 1300, wherein the optical aperture 820 is translated by a distance D with respect to the position thereof shown in FIG. 13. In this position, the circular opening 824 of the optical aperture 820 is smaller than the diameter of the focused optical beam 1302 and does not pass all light therethrough, thereby causing the conical, reflective front surface 822 of the optical aperture to reflect the clipped portions of the focused optical beam toward the light dump. The corresponding reflected light rays are labeled 1404. As a result, the transmitted optical beam 1304 of FIG. 14 has lower optical power than the transmitted optical beam 1304 of FIG. 13.

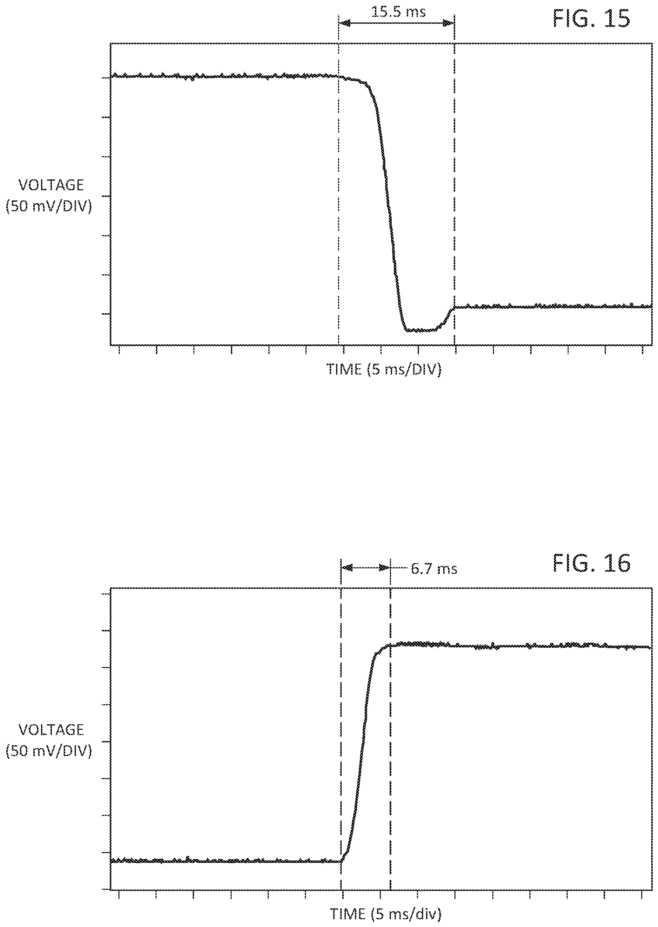

FIG. 15 graphically illustrates temporal dimming characteristics of the opto-mechanical assembly 200 according to an embodiment. More specifically, FIG. 15 illustrates an example in which the opto-mechanical assembly 200 operates to change the optical power of the second light 116 from about the 100% level to about the 10% level. In this example, the transition time between the steady 100% level and the steady 10% level is about 15.5 ms. For comparison, at the standard motion-picture frame rate of 24 fps, the duration of a single frame of the video stream is approximately 41.7 ms. As such, the opto-mechanical assembly 200 is beneficially capable of globally dimming the second light 116 on a time scale that is shorter than 40% of the frame duration corresponding the standard motion-picture frame rate. The opto-mechanical assembly 200 is also beneficially capable of globally dimming the second light 116 on a time scale that is shorter than the frame duration at the motion-picture frame rate of 30 fps or 50 fps.

FIG. 16 graphically illustrates temporal undimming characteristics of the opto-mechanical assembly 200 according to an embodiment. More specifically, FIG. 16 illustrates an example in which the opto-mechanical assembly 200 operates to change the optical power of the second light 116 from the 10% level to the 100% level. In this example, the transition time between the steady 10% level and the steady 100% level is about 6.7 ms. As such, the opto-mechanical assembly 200 is beneficially capable of globally undimming the second light 116 on a time scale that is shorter than about 20% of the frame duration corresponding the standard motion-picture frame rate. The opto-mechanical assembly 200 is also beneficially capable of globally undimming the second light 116 on a time scale that is shorter than the frame duration at the motion-picture frame rate of 30 fps or 50 fps.

Consumer and business projectors may employ global dimming. In the case of cinema projectors, movie studios typically require control of the end (projected) image parameters such that the projected images match the intent of the colorists and other artists that create the images. Dimming algorithms that can change the image parameters with unpredictable results are not typically acceptable to the movie studios. To address this issue, image-stream metadata can be used to give instructions to the dimming algorithm(s) so that the on-screen images conform to the expectations. The colorists can participate in the generation of such metadata when grading/mastering the content. Alternatively or in addition, automated display mapping can be used to regrade the image content according to a preselected fixed algorithm approved by the colorists. The latter method may particularly be useful when the regrading is performed between high-dynamic-range (HDR) content and standard-dynamic-range (SDR) content. In some cases, a combination of automated display mapping and then manually adjusting the content ("trimming") may be used to meet the requirements of the colorists. The use of metadata in system 100 may further facilitate application of the global dimming in cinema projection.

According to an example embodiment disclosed above, e.g., in the summary section and/or in reference to any one or any combination of some or all of FIGs. 1-16, provided is an apparatus comprising: an opto-mechanical attenuator (e.g., 114, FIG. 1) configured to variably attenuate source light directed to an optical output thereof; an optical modulator (e.g., one or both of 134, 142, FIG. 1) configured to generate spatially modulated light by modulating illumination light received from the optical output, said modulating being performed in accordance with image data (e.g., 168, FIG. 1) representing a sequence of image frames, each of the image frames having a constant time duration; and first optics (e.g., 130, 146, FIG. 1) configured to optically couple the optical output to the optical modulator and further configured to project the spatially modulated light, thereby projecting the sequence of image frames; and wherein the opto-mechanical attenuator is configured to change an optical power of the illumination light from a first fixed power level to a second fixed power level in a time shorter than the constant time duration.

In some embodiments of the above apparatus, a difference between the first fixed power level and the second fixed power level is at least 90% of unattenuated optical power at the optical output.

In some embodiments of any of the above apparatus, the first fixed power level is greater than the second fixed power level (e.g., FIG. 15).

In some embodiments of any of the above apparatus, the opto-mechanical attenuator comprises a motion actuator and one or more surfaces movable by the motion actuator to attenuate a variable portion of the source light.

In some embodiments of any of the above apparatus, the opto-mechanical attenuator and the first optics are configured to cause the illumination light to uniformly illuminate the optical modulator such that relative luminance in all geometric modulating parts thereof expressed as a percentage of luminance in a middle geometric modulating part thereof is higher than 75% at both the first fixed power level and the second fixed power level.

In some embodiments of any of the above apparatus, the first fixed power level is lower than the second fixed power level (e.g., FIG. 16).

In some embodiments of any of the above apparatus, the constant time duration is approximately 20 ms or approximately 40 ms.

In some embodiments of any of the above apparatus, the opto-mechanical attenuator comprises a motion actuator (e.g., 230, FIG. 2 or 8) and one or more reflective surfaces (e.g., 320₁, 320₂, FIG. 2; 822, FIG. 8) movable by the motion actuator to reflect away from the optical modulator a variable portion of the source light.

In some embodiments of any of the above apparatus, the motion actuator comprises a linear voice-coil actuator.

In some embodiments of any of the above apparatus, the opto-mechanical attenuator further comprises a holder (e.g., 210, FIG. 2) rotatably connected to a stationary base (e.g., 201, FIG. 2), the holder having mounted thereon at least one mirror (e.g., 220, FIGs. 4-7) having the one or more reflective surfaces; and wherein the motion actuator is configured to rotate the holder with respect to the stationary base to vary said portion.

In some embodiments of any of the above apparatus, the opto-mechanical attenuator further comprises an optical carriage (e.g., 810, FIG. 8) translatable along a stationary optical rail (e.g., 812, FIG. 8), the optical carriage having mounted thereon an optical aperture (e.g., 820, FIGs. 8-10) having the one or more reflective surfaces; and wherein the motion actuator is configured to translate the optical carriage along the stationary optical rail to vary said portion.

In some embodiments of any of the above apparatus, the one or more reflective surfaces include an approximately conical reflective surface (e.g., 822, FIGs. 8-10).

In some embodiments of any of the above apparatus, one of the one or more reflective surfaces has an opening therein having a shape of: a tapered slot (e.g., 402, FIG. 4); two or more circles of different respective diameters (e.g., 708, 710, FIG. 7); a rhombus (e.g., 924, FIG. 9); or a stepped polygon (e.g., 1024, FIG. 10).

In some embodiments of any of the above apparatus, one of the one or more reflective surfaces has an edge cutout therein having a shape of: a V-shaped notch (e.g., 502, FIG. 5); a stepped notch (e.g., 602, FIG. 6); or a semicircular notch (e.g., 706, FIG. 7).

In some embodiments of any of the above apparatus, the apparatus further comprises second optics (e.g., 1210, FIG. 12) configured to generate a collimated optical beam (e.g., 202, FIGs. 2, 12) by collimating the source light; and wherein the one or more reflective surfaces are configured to reflect portions (e.g., 302₁, 302₂, FIG. 3) of the collimated optical beam.

In some embodiments of any of the above apparatus, the apparatus further comprises second optics (e.g., 1210, 1310, FIG. 13) configured to generate a focused optical beam (e.g., 1302, FIG. 13) by focusing the source light; and wherein the one or more reflective surfaces are configured to reflect portions (e.g., 1404, FIG. 14) of the focused optical beam.

In some embodiments of any of the above apparatus, the apparatus further comprises wherein the first optics includes an integrator rod (e.g., 1120, FIG. 11) optically between the optical output and the optical modulator, the integrator rod having an output end facet (e.g., 1122, FIG. 11) configured to direct the illumination light toward the optical modulator; and wherein the one or more reflective surfaces are shaped (e.g., as shown in one of FIGs. 4-10) such that approximately same spatial homogeneity of the illumination light within the output end facet is maintained at the first fixed power level and at the second fixed power level.

In some embodiments of any of the above apparatus, the projector system is configured to cause said spatial homogeneity to substantially comply with an SMPTE 431-1-2006 standard.

In some embodiments of any of the above apparatus, the one or more reflective surfaces have a reflectivity of at least 90% (or 95%, or 98%, or 99%) for the source light.

In some embodiments of any of the above apparatus, the apparatus further comprises a photodetector (e.g., 120, FIG. 1) configured to generate an electrical signal (e.g., 122, FIG. 1) responsive to changes of the optical power; and an electronic controller (e.g., 170, FIG. 1) configured to control (e.g., via 174, FIG. 1) attenuation of the source light in the opto-mechanical attenuator based on the electrical signal.

In some embodiments of any of the above apparatus, the electronic controller is further configured to control (e.g., via 174, 178, FIG. 1) the optical modulator in accordance with the image data.

According to another example embodiment disclosed above, e.g., in the summary section and/or in reference to any one or any combination of some or all of FIGs. 1-16, provided is a method of variably attenuating illumination light applied to an optical modulator (e.g., one or both of 134, 142, FIG. 1) of a projector system (e.g., 100, FIG. 1), the optical modulator being configured to generate spatially modulated light by modulating the illumination light in accordance with image data (e.g., 168, FIG. 1) representing a sequence of image frames, each of the image frames having a constant time duration, the method comprising the steps of: (A) moving one or more reflective surfaces (e.g., 320₁, 320₂, FIG. 2; 822, FIG. 8) to reflect away from the optical modulator a variable portion of a source light and to direct the illumination light to the optical modulator, the illumination light comprising a remaining portion of the source light, the moving being performed using a motion actuator (e.g., 230, FIG. 2 or 8); and (B) operating the motion actuator to change an optical power of the illumination light from a first fixed power level to a second fixed power level in a time shorter than the constant time duration.

According to yet another example embodiment disclosed above, e.g., in the summary section and/or in reference to any one or any combination of some or all of FIGs. 1-16, provided is a non-transitory, machine-readable medium storing instructions that, when executed by a processor of a projector system, cause the projector system to perform operations comprising the above method.

According to yet another example embodiment disclosed above, e.g., in the summary section and/or in reference to any one or any combination of some or all of FIGs. 1-16, provided is a projector system, comprising: an opto-mechanical attenuator (e.g., 114, FIG. 1) configured to variably attenuate source light directed to an optical output thereof; an optical modulator (e.g., 142, FIG. 1) configured to generate spatially modulated light by modulating illumination light received from the optical output, said modulating being performed in accordance with image data; and first optics (e.g., 130, FIG. 1) configured to optically couple the optical output to the optical modulator; wherein the opto-mechanical attenuator is configured to change an optical power of the illumination light from a first fixed power level to a second fixed power level; and wherein the opto-mechanical attenuator and the first optics are configured to cause the illumination light to uniformly illuminate the optical modulator such that relative luminance in all geometric modulating parts thereof expressed as a percentage of luminance in a middle geometric modulating part thereof is higher than 75% at both the first fixed power level and the second fixed power level. For example, the geometric modulating parts (e.g., pixel elements) of the optical modulator may be arranged in a rectangular array. The middle geometric modulating parts may be located near the intersection of the two diagonals of the rectangle corresponding to (e.g., outlining) the rectangular array. Other geometric modulating parts may include pixel elements located near the sides of the rectangle, in and near the corners of the rectangle, between the geometric center and the perimeter of the rectangle, and so on. Herein, the term "all geometric modulating parts" typically and primarily refers only to the pixel elements configured to and used to generate an image in accordance with the image data (168).

In some embodiments of the above projector system, the system further comprises second optics (e.g., 146, FIG. 1) configured to project the spatially modulated light onto a screen; and wherein the opto-mechanical attenuator and the first and second optics are configured to cause uniform illumination of the screen such that, for an unmodulated light, relative luminance in all geometric parts of the screen expressed as a percentage of luminance in a geometric center of the screen is higher than 75% at both the first fixed power level and the second fixed power level.

All terms used in the claims are intended to be given their broadest reasonable constructions and their ordinary meanings as understood by those knowledgeable in the technologies described herein unless an explicit indication to the contrary is made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments incorporate more features than are expressly recited in each claim. Rather, as the following claims reflect, inventive subject matter lies in fewer than all features of a single disclosed embodiment. Thus, the following claims are defining the claimed subject matter.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, which is defined in the following claims.

For the purposes of this specification, a MEMS device is a device having two or more parts adapted to move relative to one another, where the motion is based on any suitable interaction or combination of interactions, such as mechanical, thermal, electrical, magnetic, optical, and/or chemical interactions. MEMS devices are fabricated using micro- or smaller fabrication techniques (including nano-fabrication techniques) that may include, but are not necessarily limited to: (1) self-assembly techniques employing, e.g., self-assembling monolayers, chemical coatings having high affinity to a desired chemical substance, and production and saturation of dangling chemical bonds and (2) wafer/material processing techniques employing, e.g., lithography, chemical vapor deposition, patterning and selective etching of materials, and treating, shaping, plating, and texturing of surfaces. The scale/size of certain elements in a MEMS device may be such as to permit manifestation of quantum effects. Examples of MEMS devices include, without limitation, NEMS (nano-electromechanical systems) devices, MOEMS (micro-opto-electromechanical systems) devices, micromachines, microsystems, and devices produced using microsystems technology or microsystems integration.

Although the present disclosure has been described in the context of implementation as MEMS devices, some embodiments can in theory be implemented at any scale, including scales larger than micro-scale.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Unless otherwise specified herein, in addition to its plain meaning, the conjunction "if" may also or alternatively be construed to mean "when" or "upon" or "in response to determining" or "in response to detecting," which construal may depend on the corresponding specific context. For example, the phrase "if it is determined" or "if [a stated condition] is detected" may be construed to mean "upon determining" or "in response to determining" or "upon detecting [the stated condition or event]" or "in response to detecting [the stated condition or event]."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

As used herein in reference to an element and a standard, the term compatible means that the element communicates with other elements in a manner wholly or partially specified by the standard, and would be recognized by other elements as sufficiently capable of communicating with the other elements in the manner specified by the standard. The compatible element does not need to operate internally in a manner specified by the standard.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

As used in this application, the terms "circuit," "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

"BRIEF SUMMARY OF SOME SPECIFIC EMBODIMENTS" in this specification is intended to introduce some example embodiments, with additional embodiments being described in "DETAILED DESCRIPTION" and/or in reference to one or more drawings. "BRIEF SUMMARY OF SOME SPECIFIC EMBODIMENTS" is not intended to identify essential elements or features of the claimed subject matter, nor is it intended to limit the scope of the claimed subject matter.

## Claims

1. A laser projector system, comprising:
an opto-mechanical attenuator (114) configured to variably attenuate source light directed to an optical output thereof, wherein the source light is a laser beam;
an optical modulator (134, 142) configured to generate spatially modulated light by modulating illumination light received from the optical output, said modulating being performed in accordance with image data (168) representing a sequence of image frames, each of the image frames having a constant time duration; and
first optics (130,146) configured to optically couple the optical output to the optical modulator and further configured to project the spatially modulated light, thereby projecting the sequence of image frames, wherein the first optics includes an integrator rod optically between the optical output and the optical modulator, the integrator rod having an output end facet configured to direct the illumination light toward the optical modulator; and
wherein the opto-mechanical attenuator (114) comprises a motion actuator and one or more reflective surfaces (320₁, 320₂) movable by the motion actuator to reflect away from the optical modulator a variable portion of the source light to change an optical power of the illumination light from a first fixed power level to a second fixed power level in a time shorter than the constant time duration;
wherein the one or more reflective surfaces are shaped such that approximately the same spatial homogeneity of the illumination light within the output end facet is maintained at the first fixed power level and at the second fixed power level.

2. The projector system of claim 1, wherein a difference between the first fixed power level and the second fixed power level is at least 90% of unattenuated optical power at the optical output.

3. The projector system of claim 1, wherein the constant time duration is approximately 20 ms or approximately 40 ms.

4. The projector system of claim 1, wherein the motion actuator comprises a linear actuator.

5. The projector system of claim 1,
wherein the opto-mechanical attenuator further comprises a holder rotatably connected to a stationary base, the holder having mounted thereon at least one mirror having the one or more reflective surfaces; and
wherein the motion actuator is configured to rotate the holder with respect to the stationary base to vary said variable portion.

6. The projector system of claim 1,
wherein the opto-mechanical attenuator further comprises an optical carriage translatable along a stationary optical rail, the optical carriage having mounted thereon an optical aperture having the one or more reflective surfaces; and
wherein the motion actuator is configured to translate the optical carriage along the stationary optical rail to vary said variable portion.

7. The projector system of claim 1, wherein the one or more reflective surfaces include an approximately conical reflective surface.

8. The projector system of claim 1, wherein one of the one or more reflective surfaces has an opening therein having a shape of:
a tapered slot;
two or more circles of different respective diameters;
a rhombus; or
a stepped polygon.

9. The projector system of claim 1, wherein one of the one or more reflective surfaces has an edge cutout therein having a shape of:
a V-shaped notch;
a stepped notch; or
a semicircular notch.

10. The projector system of claim 1, further comprising collimation optics configured to generate a collimated optical beam by collimating the source light; and
wherein the one or more reflective surfaces are configured to reflect portions of the collimated optical beam.

11. The projector system of claim 1, further comprising second optics configured to generate a focused optical beam by focusing the source light; and
wherein the one or more reflective surfaces are configured to reflect portions of the focused optical beam.

12. The projector system of claim 1, further comprising:
a photodetector configured to generate an electrical signal responsive to changes of the optical power; and
an electronic controller configured to control attenuation of the source light in the opto-mechanical attenuator based on the electrical signal.

13. The projector system of claim 12, wherein the electronic controller is further configured to control the optical modulator in accordance with the image data.

14. A method of variably attenuating, using an opto-mechanical attenuator (114), illumination light applied to an optical modulator (134, 142) of a projector system, the optical modulator being configured to generate spatially modulated light by modulating the illumination light in accordance with image data representing a sequence of image frames, each of the image frames having a constant time duration, the method comprising:
moving one or more reflective surfaces (320₁, 320₂) of the opto-mechanical attenuator to reflect away from the optical modulator (134, 142) a variable portion of a source light, the source light being a laser beam, and to direct the illumination light to first optics, the illumination light comprising a remaining portion of the source light, the moving being performed using a motion actuator (230);
directing, by an output end facet of an integrator rod of the first optics, the illumination light towards the optical modulator,
wherein the moving is performed such that an optical power of the illumination light is changed from a first fixed power level to a second fixed power level in a time shorter than the constant time duration and wherein the one or more reflective surfaces are shaped such that approximately the same spatial homogeneity of the illumination light within the output end facet is maintained at the first fixed power level and at the second fixed power level.

15. A non-transitory computer-readable medium storing instructions that, when executed by a processor of a projector system according to claim 1, cause the projector system to perform operations comprising the method according to claim 14.

## Patentansprüche

1. Laserprojektorsystem, umfassend:
einen optomechanischen Dämpfer (114), der so konfiguriert ist, dass er auf einen optischen Ausgang gerichtetes Quelllicht variabel dämpft, wobei das Quelllicht ein Laserstrahl ist;
einen optischer Modulator (134, 142), der so konfiguriert ist, dass er räumlich moduliertes Licht erzeugt, indem er vom optischen Ausgang empfangenes Beleuchtungslicht moduliert, wobei das Modulieren gemäß Bilddaten (168) durchgeführt wird, die eine Sequenz von Einzelbildern darstellen, wobei jedes der Einzelbilder eine konstante Zeitdauer aufweist; und
erste Optik (130, 146), die so konfiguriert ist, dass sie den optischen Ausgang optisch mit dem optischen Modulator koppelt und weiter so konfiguriert ist, dass sie das räumlich modulierte Licht projiziert und dadurch die Sequenz von Einzelbildern projiziert, wobei die erste Optik einen Integratorstab optisch zwischen dem optischen Ausgang und dem optischen Modulator einschließt, wobei der Integratorstab eine Ausgangsendfläche aufweist, die so konfiguriert ist, dass sie das Beleuchtungslicht auf den optischen Modulator lenkt; und
wobei der optomechanische Dämpfer (114) eine Bewegungsbetätigungsvorrichtung und eine oder mehrere reflektierende Oberflächen (320₁. 320₂) umfasst, die durch die Bewegungsbetätigungsvorrichtung bewegbar sind, um einen variablen Anteil des Quelllichts vom optischen Modulator weg zu reflektieren, um eine optische Leistung des Beleuchtungslichts in einer Zeit, die kürzer als die konstante Zeitdauer ist, von einem ersten festen Leistungspegel in einen zweiten festen Leistungspegel zu ändern;
wobei die eine oder mehrere reflektierenden Oberflächen so geformt sind, dass bei dem ersten festen Leistungspegel und bei dem zweiten festen Leistungspegel annähernd die gleiche räumliche Homogenität des Beleuchtungslichts innerhalb der Austrittsendfläche erhalten bleibt.

2. Projektorsystem nach Anspruch 1, wobei eine Differenz zwischen dem ersten festen Leistungspegel und dem zweiten festen Leistungspegel mindestens 90 % der ungedämpften optischen Leistung am optischen Ausgang beträgt.

3. Projektorsystem nach Anspruch 1, wobei die konstante Zeitdauer ungefähr 20 ms oder ungefähr 40 ms beträgt.

4. Projektorsystem nach Anspruch 1, wobei die Bewegungsbetätigungsvorrichtung eine lineare Betätigungsvorrichtung umfasst.

5. Projektorsystem nach Anspruch 1,
wobei der optomechanische Dämpfer weiter einen drehbar mit einem feststehenden Sockel verbundenen Halter umfasst, wobei der Halter darauf montiert mindestens einen Spiegel aufweist, der eine oder mehrere reflektierende Oberflächen aufweist; und
wobei die Bewegungsbetätigungsvorrichtung so konfiguriert ist, dass sie den Halter in Bezug auf den feststehenden Sockel dreht, um den variablen Anteil zu variieren.

6. Projektorsystem nach Anspruch 1,
wobei der optomechanische Dämpfer weiter einen entlang einer feststehenden optischen Schiene verschiebbaren optischen Schlitten umfasst, wobei der optische Schlitten darauf montiert eine optische Apertur aufweist, die eine oder mehrere reflektierende Oberflächen aufweist; und
wobei die Bewegungsbetätigungsvorrichtung so konfiguriert ist, dass sie den optischen Schlitten entlang der feststehenden optischen Schiene verschiebt, um den variablen Anteil zu variieren.

7. Projektorsystem nach Anspruch 1, wobei die eine oder die mehreren reflektierenden Oberflächen eine annähernd kegelförmige reflektierende Oberfläche einschließen.

8. Projektorsystem nach Anspruch 1, wobei eine der einen oder der mehreren reflektierenden Oberflächen darin eine Öffnung aufweist, die eine folgender Formen aufweist:
einen sich verjüngender Schlitz;
zwei oder mehr Kreise mit jeweils unterschiedlichen Durchmessern;
eine Raute; oder
ein gestuftes Polygon.

9. Projektorsystem nach Anspruch 1, wobei eine der einen oder der mehreren reflektierenden Oberflächen eine Kantenaussparung darin aufweist, die eine der folgenden Formen aufweist:
eine V-förmige Kerbe;
eine gestufte Kerbe; oder
eine halbkreisförmige Kerbe.

10. Projektorsystem nach Anspruch 1, weiter umfassend eine Kollimationsoptik, die so konfiguriert ist, dass sie durch Kollimation des Quelllichts einen gebündelten optischen Strahl erzeugt; und
wobei die eine oder die mehreren reflektierende Oberflächen so konfiguriert sind, dass sie Anteile des gebündelten optischen Strahls reflektieren.

11. Projektorsystem nach Anspruch 1, weiter umfassend eine zweite Optik, die so konfiguriert ist, dass sie durch Fokussierung des Quelllichts einen fokussierten optischen Strahl erzeugt; und
wobei die eine oder die mehreren reflektierende Oberflächen so konfiguriert sind, dass sie Anteile des fokussierten optischen Strahls reflektieren.

12. Projektorsystem nach Anspruch 1, weiter umfassend:
einen Fotodetektor, der so konfiguriert ist, dass er ein elektrisches Signal erzeugt, das auf Änderungen der optischen Leistung reagiert; und
eine elektronische Steuereinheit, die so konfiguriert ist, dass sie Dämpfung des Quelllichts im optomechanischen Dämpfer basierend auf dem elektrischen Signal steuert.

13. Projektorsystem nach Anspruch 12, wobei die elektronische Steuereinheit weiter so konfiguriert ist, dass sie den optischen Modulator entsprechend den Bilddaten steuert.

14. Verfahren zur variablen Dämpfung von Beleuchtungslicht, unter Verwendung eines optomechanischen Dämpfers (114), wobei Beleuchtungslicht auf einen optischen Modulator (134, 142) eines Projektorsystems angewendet wird, wobei der optische Modulator so konfiguriert ist, dass er räumlich moduliertes Licht erzeugt, indem er das Beleuchtungslicht entsprechend Bilddaten moduliert, die eine Sequenz von Einzelbildern darstellen, wobei jedes der Einzelbilder eine konstante Zeitdauer aufweist, wobei das Verfahren Folgendes umfasst:
Bewegen einer oder mehrerer reflektierender Oberflächen (320₁. 320₂) des optomechanischen Dämpfers, um einen variablen Anteil eines Quelllichts vom optischen Modulator (134, 142) weg zu reflektieren, wobei das Quelllicht ein Laserstrahl ist, und um das Beleuchtungslicht auf eine erste Optik zu lenken, wobei das Beleuchtungslicht einen verbleibenden Anteil des Quelllichts umfasst; wobei die Bewegung unter Verwendung einer Bewegungsbetätigungsvorrichtung (230) durchgeführt wird;
Lenken, durch eine Ausgangsendfläche eines Integratorstabs der ersten Optik, des Beleuchtungslichts auf den optischen Modulator,
wobei die Bewegung so durchgeführt wird, dass eine optische Leistung des Beleuchtungslichts in einer Zeit, die kürzer als die konstante Zeitdauer ist, von einem ersten festen Leistungspegel in einen zweites festes Leistungspegel geändert wird, und wobei die eine oder die mehreren reflektierenden Oberflächen so geformt sind, dass ungefähr die gleiche räumliche Homogenität des Beleuchtungslichts innerhalb der Austrittsendfläche bei dem ersten festen Leistungspegel und bei dem zweiten festen Leistungspegel erhalten bleibt.

15. Nichtflüchtiges computerlesbares Medium, das Anweisungen speichert, die, wenn sie von einem Prozessor eines Projektorsystems nach Anspruch 1 ausgeführt werden, bewirken, dass das Projektorsystem Operationen durchführt, die das Verfahren nach Anspruch 14 umfassen.

## Revendications

1. Système de projection laser comprenant :
un atténuateur opto-mécanique (114) configuré pour atténuer de manière variable la lumière source dirigée vers une sortie optique de celui-ci, dans lequel la lumière source est un faisceau laser ;
un modulateur optique (134, 142) configuré pour générer une lumière modulée spatialement en modulant la lumière d'éclairage reçue de la sortie optique, ladite modulation étant effectuée conformément aux données d'image (168) représentant une séquence de trames d'image, chacune des trames d'image présentant une durée constante ; et
des premières optiques (130, 146) configurées pour coupler optiquement la sortie optique au modulateur optique et configurées en outre pour projeter la lumière modulée spatialement, projetant ainsi la séquence de trames d'image, dans lequel les premières optiques incluent une tige d'intégration optiquement entre la sortie optique et le modulateur optique, la tige d'intégration présentant une facette d'extrémité de sortie configurée pour diriger la lumière d'éclairage vers le modulateur optique ; et
dans lequel l'atténuateur opto-mécanique (114) comprend un actionneur de mouvement et une ou plusieurs surfaces réfléchissantes (320₁, 320₂) mobiles par l'actionneur de mouvement pour réfléchir loin du modulateur optique une partie variable de la lumière source afin de modifier la puissance optique de la lumière d'éclairage d'un premier niveau de puissance fixe à un second niveau de puissance fixe dans un temps plus court que la durée constante ;
dans lequel les une ou plusieurs surfaces réfléchissantes sont conçues de sorte que la même homogénéité spatiale de la lumière d'éclairage à l'intérieur de la facette d'extrémité de sortie soit maintenue approximativement au premier niveau de puissance fixe et au second niveau de puissance fixe.

2. Système de projection selon la revendication 1, dans lequel la différence entre le premier niveau de puissance fixe et le second niveau de puissance fixe est d'au moins 90 % de la puissance optique non atténuée à la sortie optique.

3. Système de projection selon la revendication 1, dans lequel la durée constante est d'approximativement 20 ms ou d'approximativement 40 ms.

4. Système de projection selon la revendication 1, dans lequel l'actionneur de mouvement comprend un actionneur linéaire.

5. Système de projection selon la revendication 1,
dans lequel l'atténuateur opto-mécanique comprend en outre un support relié de manière rotative à une base fixe, le support portant au moins un miroir présentant les une ou plusieurs surfaces réfléchissantes ; et
dans lequel l'actionneur de mouvement est configuré pour faire tourner le support par rapport à la base fixe afin de faire varier ladite partie variable.

6. Système de projection selon la revendication 1,
dans lequel l'atténuateur opto-mécanique comprend en outre un chariot optique déplaçable le long d'un rail optique fixe, le chariot optique portant une ouverture optique présentant les une ou plusieurs surfaces réfléchissantes ; et
dans lequel l'actionneur de mouvement est configuré pour déplacer le chariot optique le long du rail optique fixe afin de faire varier ladite partie variable.

7. Système de projection selon la revendication 1, dans lequel les une ou plusieurs surfaces réfléchissantes incluent une surface réfléchissante approximativement conique.

8. Système de projection selon la revendication 1, dans lequel l'une des une ou plusieurs surfaces réfléchissantes présente une ouverture dedans présentant la forme suivante :
une fente conique ;
deux cercles ou plus de diamètres respectifs différents ;
un losange ; ou
un polygone étagé.

9. Système de projection selon la revendication 1, dans lequel l'une des une ou plusieurs surfaces réfléchissantes présente une découpe de bord dedans présentant la forme suivante :
une encoche en forme de V ;
une encoche étagée ; ou
une encoche semi-circulaire.

10. Système de projection selon la revendication 1, comprenant en outre des optiques de collimation configurées pour générer un faisceau optique collimaté en collimatant la lumière source ; et
dans lequel les une ou plusieurs surfaces réfléchissantes sont configurées pour réfléchir des parties du faisceau optique collimaté.

11. Système de projection selon la revendication 1, comprenant en outre des secondes optiques configurées pour générer un faisceau optique focalisé en focalisant la lumière source ; et
dans lequel les une ou plusieurs surfaces réfléchissantes sont configurées pour réfléchir des parties du faisceau optique focalisé.

12. Système de projection selon la revendication 1, comprenant en outre :
un photodétecteur configuré pour générer un signal électrique en réponse aux variations de la puissance optique ; et
un dispositif de commande électronique configuré pour commander l'atténuation de la lumière source dans l'atténuateur opto-mécanique en fonction du signal électrique.

13. Système de projection selon la revendication 12, dans lequel le dispositif de commande électronique est en outre configuré pour commander le modulateur optique conformément aux données d'image.

14. Procédé d'atténuation variable, utilisant un atténuateur opto-mécanique (114), de la lumière d'éclairage appliquée à un modulateur optique (134, 142) d'un système de projection, le modulateur optique étant configuré pour générer une lumière modulée spatialement en modulant la lumière d'éclairage conformément aux données d'image représentant une séquence de trames d'image, chacune des trames d'image présentant une durée constante, le procédé comprenant :
le déplacement d'une ou plusieurs surfaces réfléchissantes (320₁. 320₂) de l'atténuateur opto-mécanique pour réfléchir loin du modulateur optique (134, 142) une partie variable d'une lumière source, la lumière source étant un faisceau laser, et pour diriger la lumière d'éclairage vers les premières optiques, la lumière d'éclairage comprenant une partie restante de la lumière source, le déplacement étant effectué à l'aide d'un actionneur de mouvement (230) ;
la direction, par une facette d'extrémité de sortie d'une tige d'intégration des premières optiques, de la lumière d'éclairage vers le modulateur optique,
dans lequel le déplacement est effectué de telle sorte que la puissance optique de la lumière d'éclairage passe d'un premier niveau de puissance fixe à un second niveau de puissance fixe dans un temps plus court que la durée constante et dans lequel les une ou plusieurs surfaces réfléchissantes sont conçues de sorte que la même homogénéité spatiale de la lumière d'éclairage au sein de la facette d'extrémité de sortie soit approximativement maintenue au premier niveau de puissance fixe et au second niveau de puissance fixe.

15. Support non transitoire lisible par ordinateur stockant des instructions qui, lorsqu'elles sont exécutées par un processeur d'un système de projection selon la revendication 1, amènent le système de projection à effectuer des opérations comprenant le procédé selon la revendication 14.
